# EUROPEAN PATENT APPLICATION

(11) **EP 0 974 633 A1**
(43) Date of publication of application: **26.01.2000**
(21) Application number: 98901001.2
(22) Date of filing: 22.01.1998
(51) Int. Cl.: C09K 5/04, B01D 15/00, F25B 43/00, F25B 1/00

(54) **REFRIGERATOR AND HYDRAULIC MEDIUM**

(30) Priority: 27.02.1997 JP 4324297; 20.08.1997 JP 22339597
(71) Applicant: Daikin Industries, Limited, Osaka-shi, Osaka 530-0015 (JP)
(72) Inventor: TSUCHIYA, Tatsumi, 1-1, Nishihitotsuya Settsu-shi Osaka 566 (JP); IDE, Satoshi, 1-1, Nishihitotsuya Settsu-shi Osaka 566 (JP); SHIBANUMA, Takashi, 1-1, Nishihitotsuya Settsu-shi Osaka 566 (JP)
(74) Representative: Luderschmidt, Schüler & Partner GbR
(86) International application number: JP9800286
(87) International publication number: WO9838264

(57) **Abstract**

In a vapor compression type refrigerator having a working medium which comprises a refrigerant containing HFC32 as an essential component and at least one refrigerator oil selected from the group consisting of an ether-based refrigerator oil and an ester-based refrigerator oil, a synthetic zeolite having an average microporous diameter larger than 2.6 Å but not larger than 3.0 Å at 25°C is used as a drying agent for the working medium.

## Description

### Technical Field

The present invention relates to a refrigerator having a working medium which contains a so-called "post 22 system", i.e., a hydrochlorofluorocarbon refrigerant substitute for HCFC22 (monochlorodifluoromethane) and a refrigerator oil coexisting with the refrigerant, and a working medium used for the refrigerator. More specifically, the present invention relates to a refrigerator whose working medium does not decompose and is usable for a long time and a working medium used for the refrigerator. Concretely, the present invention relates to a refrigerator using a drying agent for the purpose of removing water from the working medium and a working medium used for the refrigerator.

### Prior Art

The vapor compression type refrigeration cycle in which a fluid is cooled or heated by utilizing changes in the state of substances, namely evaporation and condensation, is widely used in heating and cooling equipments, refrigerators, hot water supply systems, and the like. For such vapor compression type refrigeration cycles, various refrigerants including hydrofluorocarbon refrigerants have been developed and put to use. Among them, HCFC22 (monochlorodifluoromethane) is widely used as a refrigerant in heating and cooling equipment for air conditioning.

However, hydrochlorofluorocarbons such as HCFC-22 were recently found to be responsible for the destruction of the ozone layer of the stratosphere when released into the atmosphere and eventually exert seriously adverse effects on the ecosystem including human on the earth. Thus, a worldwide agreement calls for the restriction of use and in the future the total abolition thereof. Under these circumstances, hydrofluorocarbons (HFC), for example, those free from chlorine, which has no or little potential to cause the problem of depleting the ozone layer, are being considered as substitutes for HCFC-22.

Since HFC has low compatibility with mineral oils which have been conventionally used as refrigerator oils, when HFC is used as a refrigerant in the vapor compression type refrigeration cycle, ester-based or ether-based refrigerator oils are used. For example, when using refrigerants (e.g., R410A and R407C) containing HFC such as HFC32 (difluoromethane) for air-conditioners as an alternative refrigerant for HCFC22, ester-based refrigerator oils are used as refrigerator oils for their compatibility with HFC.

Ester compounds used as ester-based refrigerator oils are very reactive with water because of their ester structures and thus prone to hydrolysis, which is easily caused by, for example, water entering into the system. When an ester compound is hydrolyzed, carboxylic acid is formed. The carboxylic acid reacts with metals to thereby form insoluble metallic soaps, leading to plugged capillaries of the refrigerator and other problems.

Accordingly, when an ester-based refrigerator oil is used, water has to be removed from the system. One of the methods for doing so is removing water in the refrigerator oil using drying agents. For instance, zeolite is used as such drying agent.

However, zeolite is reactive with HFC and refrigerator oils, particularly with C₁ halogenated hydrocarbons whose molecular diameter is relatively small. The decomposition products of such reaction are problematic since they may corrode the internal system and lower the performance of the system.

The dehydration mechanism of working mediums using zeolite is mainly achieved by sieving molecules having different diameters. When the diameter difference between the water molecules and HFC or other compounds contained in working mediums to be dehydrated are large, water molecules are selectively adsorbed. On the other hand, when dehydrating the working medium containing a compound whose molecular diameter is relatively close to that of water molecule, for example, C₁ halogenated hydrocarbons such as HFC32, a part of the HFC32 are adsorbed and decomposed.

When a conventional drying agent (zeolite) for working mediums is used for a refrigerator having a working medium comprising a refrigerant which contains HFC32 as an essential component and at least one refrigerator oil selected from the group consisting of an ether-based refrigerator oil and ester-based refrigerator oil, even in case no decomposition products derived from HFC is recognized, fluorine is detected in the zeolite. When the fluorine concentration in the zeolite exceeds 1000 ppm, an ester-based refrigerator oil undergoes a considerable increase in a total acid value, whereas an ether-based refrigerator oil forms decomposition products which are considered to be decomposed terminal groups.

Consequently, the high activity of the zeolite used as a drying agent causes decomposition of the refrigerants and their impurities within the zeolite on which they are adsorbed. Formed halogens remain within the zeolite. If the amount of the remaining halogens exceeds a certain level (1000 wt. ppm based on zeolite), the properties of the zeolite as a drying agent is degraded and the hydrolysis of the refrigerator oils is accelerated.

This phenomenon occurs because C₁ components of the refrigerant, e.g., HFC32 are adsorbed by zeolite as well as water molecules and decomposed, and the activity of the zeolite relative to the refrigerator oil is changed. In short, the conventional drying agent (zeolite) has the problem of adsorbing and decomposing HFC.

Although HFC32 is adsorbed and decomposed by zeolite at a low level, this level is not high enough to promote deterioration of the working mediums including the refrigerator oil. However, because of their molecular structure, the C₁ halogenated hydrocarbons, which are less stable than HFC32, are more easily adsorbed and decomposed by zeolite than HFC32, leading to an increase in the total acid value of the refrigerator oils.

In particular, the production process of HFC32 has the potential to by-produce C₁ halogenated hydrocarbons other than HFC32 as inclusion in HFC32. The C₁ halogenated hydrocarbons, which are possibly included in HFC32, have as large or nearly as large molecular diameters as HFC32, and are easily adsorbed onto zeolite.

The C₁ halogenated hydrocarbons which are possibly included in HFC32 are, for example, FC14 (tetrafluoromethane). HFC23 (trifluoromethane), HFC41 (monofluoromethane), HCFC21 (dichloromonofluoromethane), HCFC22 (monochlorodifluoromethane), HCFC31 (monochloromonofluoromethane), CFC11 (trichloromonofluoromethane), CFC12 (dichlorodifluoromethane), CFC13 (monochlorotrifluoromethane), HCC10 (tetrachloromethane), HCC20 (trichloromethane), HCC30 (dichloromethane), HCC40 (monochloromethane) and the like.

Accordingly, with a certain amount of halogenated hydrocarbons which are possibly adsorbed and decomposed by zeolite in the working medium, decomposition of the refrigerator oil is promoted by the above-mentioned mechanism. For example, ester oils may have an increased total acid value and plugged capillaries.

Recently proposed are the methods wherein different types of metal cations added to the zeolite used as a drying agent for working mediums to limit the influence of zeolite on HFC (Japanese Unexamined Patent Publication No. 206493/1996, No. 206494/1996, No. 206495/1996, etc.). However, there is a need for a technique for further lowering the activity of drying agents to working mediums (refrigerants and refrigerator oils).

### Disclosure of the Invention

It is the object of the present invention to provide a vapor compression type refrigerator (post 22 system) having a working medium comprising a refrigerant which contains HFC32 as an essential component and at least one refrigerator oil selected from the group consisting of an ether-based refrigerator oil and an ester-based refrigerator oil, wherein the difficulties (e.g., plugged capillaries) due to refrigerator oil decomposition is alleviated by using synthetic zeolite as a drying agent for the working medium, said zeolite having little or no adverse effect on a working medium.

The inventors of the present invention carried out extensive research to solve the above problems, and found that in a refrigeration cycle of the post 22 system, the activity of zeolite to the refrigerator oil was altered (increased) as a refrigerant (HFC32, etc.) was adsorbed onto a drying agent (zeolite) used to prevent hydrolysis of the refrigerator oil and formed halogens remained within zeolite, and that the amount of remaining halogens formed by the adsorption and decomposition were proportional to the concentration of the adsorbed substances in the refrigerant.

Further, the inventors of the present invention found that using synthetic zeolite which is unlikely to adsorb and decompose HFC32 and the like as a drying agent and fixing the upper limit of the concentration of the substance which are highly prone to adsorption and decomposition reaction with zeolite in a working medium (refrigerant) can prevent the change in activity of the synthetic zeolite to the refrigerator oil, enabling to provide a refrigeration system which does not affect the refrigerator oil and is stable for a long time.

The present invention provides the following refrigerator and working medium.
Item 1. A vapor compression type refrigerator having a working medium comprising a refrigerant containing HFC32 as an essential component and at least one refrigerator oil selected from the group consisting of an ether-based refrigerator oil and an ester-based refrigerator oil, wherein a synthetic zeolite having an average microporous diameter larger than 2.6 Å but not larger than 3.0 Å at 25°C is used as a drying agent for the working medium.
Item 2. The refrigerator according to item 1, wherein the average microporous diameter of the synthetic zeolite is 2.7-3.0 Å at 25°C.
Item 3. The refrigerator according to item 1, wherein the average microporous diameter of the synthetic zeolite is 2.8-3.0 Å at 25°C.
Item 4. The refrigerator according to any of the above items, wherein the refrigerator oil is a refrigerator oil based on an ester having 9 or more carbon atoms and/or a refrigerator oil based on an ether having 10 or more carbon atoms.
Item 5. The refrigerator according to any of the above items, which is provided with a capillary as pressure reducer.
Item 6. The refrigerator according to any of the above items, wherein the refrigerant contains at least one member selected from the group consisting of FC116 (hexafluoroethane), HFC125 (pentafluoroethane), HFC134a (1,1,1,2-tetrafluoroethane), HFC143a (1,1,1-trifluoroethane) and HFC152a (1,1-difluoroethane).
Item 7. The refrigerator according to any of the above items, wherein the refrigerant contains a C₁ halogenated hydrocarbon other than HFC32.
Item 8. The refrigerator according to item 7, wherein the C₁ halogenated hydrocarbon other than HFC32 is at least one member selected from the group consisting of HCC30, HCC40, HCFC22, HCFC31, HFC41, CFC12 and HFC23.
Item 9. The refrigerator according to any of the above items, wherein the refrigerant contains HCC30 in a concentration of 0.1 mol % or less, HCC40 in a concentration of 0.1 mmol % or less, HCFC22 in a concentration of 0.5 mol % or less, HCFC31 in a concentration of 0.1 mol % or less and HFC41 in a concentration of 0.5 mol % or less.
Item 10. The refrigerator according to any of the above items, wherein the amount of the refrigerant adsorbed and decomposed by the synthetic zeolite used as a drying agent, within the range of conditions for use, is equal to or less than the amount of HFC32 adsorbed and decomposed when HFC32 is used singly as a refrigerant.
Item 11. The refrigerator according to any of items 1 to 10, wherein the upper limit of the temperature range of use conditions is not lower than 90°C.
Item 12. The refrigerator according to any of the above items, wherein the temperature range of use conditions is -40°C to 120°C.
Item 13. A working medium for a refrigerator which uses a synthetic zeolite having an average microporous diameter larger than 2.6 Å but not larger than 3.0 Å at 25°C as a drying agent for the working medium, wherein the working medium comprises a refrigerant containing HFC32 as an essential component and at least one refrigerator oil selected from the group consisting of an ether-based refrigerator oil and an ester-based refrigerator oil, the refrigerant containing a C₁ halogenated hydrocarbon other than HFC32; and within the range of conditions for use, the amount of the refrigerant adsorbed and decomposed by the synthetic zeolite used as a drying agent is equal to or less than that of HFC32 adsorbed and decomposed when HFC32 is used singly as a refrigerant.
Item 14. The working medium according to item 13, wherein the upper limit of the temperature range of use conditions is not lower than 90°C.
Item 15. The working medium according to item 13, wherein the temperature range of use conditions is -40° C to 120°C.
Item 16. The working medium according to any of the above items, wherein the refrigerant contains at least one member selected from the group consisting of FC116, HFC125, HFC134a, HFC143a and HFC152a.
Item 17. The working medium according to any of the above items, wherein the C₁ halogenated hydrocarbon other than HFC32 is at least one member selected from the group consisting of HCC30, HCC40, HCFC22, HCFC31, HFC41, CFC12 and HFC23.
Item 18. The working medium according to any of the above items, wherein the refrigerant contains HCC30 in a concentration of 0.1 mol % or less, HCC40 in a concentration of 0.1 mol % or less, HCFC22 in a concentration of 0.5 mol % or less, HCFC31 in a concentration of 0.1 mol % or less and HFC41 in a concentration of 0.5 mol % or less.

### Brief Description of Drawing

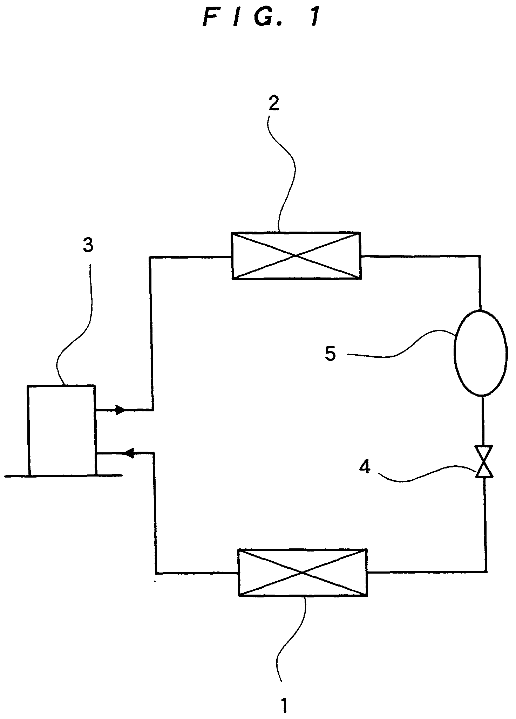

Fig. 1 is a flowchart showing the outline of the vapor compression type refrigeration system in the refrigerator of the present invention.

### Best Mode for Carrying out the Invention

### Vapor compression type refrigerator

In the vapor compression type refrigerator of the present invention having a working medium comprising a refrigerant containing HFC32 as an essential component and at least one refrigerator oil selected from the group consisting of an ether-based refrigerator oil and an ester-based refrigerator oil, synthetic zeolite having water adsorption ability is used as a drying agent for the working medium.

Fig. 1 is a flowchart of the refrigeration cycle of the vapor compression type refrigerator. The vapor compression type refrigerator has an evaporator 1 for vaporizing a refrigerant and a condenser 2 for condensing the refrigerant. A working medium (refrigerant and refrigerator oil) circulates between the evaporator 1 and the condenser 2. In heating and cooling equipment, the evaporator 1 is usually installed indoors, and the condenser 2 is installed outdoors. In the course of the working medium from the evaporator 1 to the condenser 2, a compressor 3 is located to compress the refrigerant vaporized by the evaporator 1. In the course of the working medium from the condenser 2 to the evaporator 1, a pressure reducer 4 (expansion valve or capillary) for depressurizing the inside of the evaporator 1.

For instance, when a flow-through column 5 filled with a drying agent (synthetic zeolite) is provided between the condenser 1 and the pressure reducer 4 in the course of the working medium from the condenser 2 to evaporator 1, water in the working medium can be removed.

When synthetic zeolite is used as a drying agent for a working medium comprising a refrigerant containing HFC32 and like C₁ hydrofluorocarbons and at least one refrigerator oil selected from the group consisting of an ether-based refrigerator oil and an ester-based refrigerator oil, because of relatively high activity of the synthetic zeolite to C₁ halogenated hydrocarbons, the C₁ halogenated hydrocarbons in the refrigerant is adsorbed onto the synthetic zeolite and decomposed at certain temperatures.

Halogens such as fluorine formed upon decomposition of the hydrofluorocarbons remain within the synthetic zeolite. When the amount of the remaining halogens is higher than 1000 wt. ppm based on the synthetic zeolite, the activity of the synthetic zeolite to the refrigerator oil is changed, and at certain temperatures, the decomposition of the refrigerator oil is promoted.

In the present invention, by using synthetic zeolite which has a controlled average microporous diameter and controlling the concentration of C₁ halogenated hydrocarbons other than HFC32 in the refrigerant, C₁ halogenated hydrocarbons are prevented from being adsorbed and decomposed. The present invention is useful as a refrigerator, particularly a refrigerator used within the range of the temperature condition whereof the upper limit is not lower than 70°C, or not lower than 80°C, particularly not lower than 90°C, but not higher than 160°C, or not higher than 140°C, particularly not higher than 120°C.

### Refrigerant

A refrigerant containing HFC32 as an essential component is used. HFC32 is used substantially by itself or in combination with other refrigerant components. The refrigerant may contain C₁-C₃ hydrofluorocarbons as refrigerant components other than HFC32. The C₁-C₃ hydrofluorocarbons are the compounds derived from C₁-C₃ hydrocarbons (methane, ethane, propane) by substituting fluorine atoms for hydrogen atoms.

The refrigerant may contain, as C₂ or C₃ hydrofluorocarbons, FC116, HFC125, HFC134a, HFC134 (1,1,2,2-tetrafluoroethane), HFC143a, HFC143 (1,1,2-trifluoroethane), HFC152a, HFC152 (1,2-difluoroethane), HFC161 (monofluoroethane), HFC227ca (1,1,1,2,2,3,3-heptafluoropropane), HFC227ea (1,1,1,2,3,3,3-heptafluoropropane), HFC236ea (1,1,1,2,3,3-hexafluoropropane), HFC245ca (1,1,2,2,3-pentafluoropropane), HFC245fa (1,1,1,3,3-pentafluoropropane) and the like. Among them, preferable are FC116, HFC125, FHC134a, HFC143a and HFC152a.

The amount of HFC32 to be used in combination with other refrigerant components is not particularly limited, and may be suitably selected depending on the types of other refrigerant components and their characteristics as refrigerants. For example, the lower limit of the amount is 10 wt.% or higher, preferably 20 wt.% or higher, more preferably 30 wt.% or higher, particularly preferably 40 wt.% or higher, whereas the upper limit is 90 wt.% or lower, preferably 80 wt.% or lower, more preferably 70 wt.% or lower, particularly preferably 60 wt.% or lower.

The refrigerant blends of HFC32 and other refrigerant components include a refrigerant (R410A) comprising HFC32 (50 wt.%), and HFC125 (50 wt.%) and a refrigerant (R407C) comprising HFC32 (23 wt.%), FHC125 (25 wt.%) and HFC134a (52 wt.%).

Due of its production process, HFC32 contains impurities which are difficult to separate. i.e., C₁ halogenated hydrocarbons other than HFC32. HFC32 can be produced, for example, by reducing CFC12 or HCFC22 and fluorinating HCC30 in the state of gas or liquid.

The C₁ halogenated hydrocarbons which may be present in HFC32 as impurities are FC14, HFC23, HFC41, HCFC21, HCFC22, HCFC31, CFC11, CFC12, CFC13, HCC10, HCC20, HCC30, HCC40 and the like. These compounds are likely to be adsorbed and decomposed by synthetic zeolite. Especially, HCC30, HCC40, HCFC22, HCFC31 and HFC41 are more likely to be adsorbed and decomposed by synthetic zeolite. In general, HFC32 contains more than 0.1 mol %, typically more than 0.5 mol % of C₁ halogenated hydrocarbons other than HFC32 as impurities.

HFC32 is adsorbed and decomposed by synthetic zeolite. However, when HFC32 free from other C₁ halogenated hydrocarbons is used as a refrigerant, the amount of remaining halogens within the synthetic zeolite is relatively low in the range of conditions for use. In addition, C₂ and C₃ hydrofluorocarbons, due to the large molecular diameters, are not adsorbed and decomposed by the synthetic zeolite.

The C₁ halogenated hydrocarbons other than HFC32, especially C₁ halogenated hydrocarbons having more halogens than HFC32, can be adsorbed and decomposed by the synthetic zeolite and the use of refrigerant containing such hydrocarbons increases the amount of remaining halogens within the synthetic zeolite in the range of conditions for use.

The present invention enables a working medium to be used for a long time by setting the upper limit of the concentration of C₁ halogenated hydrocarbons other than HFC32 in the refrigerant, and preventing the synthetic zeolite used as a drying agent from a decrease in its activity as a dehydrating agent and a change in its activity to refrigerator oils.

In the preferred embodiment, the concentration of C₁ halogenated hydrocarbons other than HFC32 in the refrigerant is in the range wherein the amount of the refrigerant adsorbed and decomposed by the synthetic zeolite used as a drying agent does not affect the refrigerator oil, i.e., the range wherein the amount is equal to or less than the amount of adsorption and decomposition when HFC32 is used singly as a refrigerant, specifically not more than 110%, preferably not more than 105%.

The concentration of the C₁ halogenated hydrocarbons present in HFC32 as impurities may be lowered, for example, by such operations as distillation which utilizes the difference of boiling points between substances and adsorption separation which utilizes the difference of molecular diameters or structures between substances.

The amount of refrigerant adsorbed and decomposed by the synthetic zeolite can be measured by the halogen concentration in the synthetic zeolite used as a drying agent. In the preferred embodiment, the concentration of C₁ halogenated hydrocarbons other than H7C32 in the refrigerant is in the range that the halogen concentration within the synthetic zeolite in the range of conditions for use is not higher than 1000 wt. ppm, preferably not higher than 800 wt. ppm, more preferably not higher than 600 wt. ppm, particularly preferably not higher than 400 wt. ppm.

The halogen concentration within the synthetic zeolite can be measured, for example, immersing (for 48 hours or longer) the weighed drying agent into a known amount of pure water to extract the halogens from the drying agent and treating by ion chromatography.

In the preferred embodiment, the concentration of HCC30 in the refrigerant is not higher than 0.1 mol %, preferably not higher than 0.05 mol % (typically not higher than 0.01 mol %, particularly not higher than 0.03 mol %). In the preferred embodiment, the concentration of HCC40 in the refrigerant is not higher than 0.1 mol %, preferably not higher than 0.05 mol % (typically not higher than 0.01 mol %, particular not higher than 0.03 mol %).

In the preferred embodiment, the concentration of HCFC22 in the refrigerant is not higher than 0.5 mol %, preferably not higher than 0.1 mol % (typically not higher than 0.01 mol %, particularly not higher than 0.05 mol %). In the preferred embodiment, the concentration of HCFC31 in the refrigerant is not higher than 0.5 mol %, preferably not higher than 0.1 mol % (typically not higher than 0.01 mol %, particularly not higher than 0.05 mol %). In the preferred embodiment, the concentration of HFC41 in the refrigerant is not higher than 0.5 mol %, preferably not higher than 0.1 mol % (typically not higher than 0.01 mol %, particularly not higher than 0.05 mol %).

In the more preferred embodiment, the total concentration of HCC30 and HCC40 in the refrigerant is not higher than 0.1 mol %, preferably not higher than 0.05 mol % (typically not higher than 0.01 mol %, particularly not higher than 0.03 mol %). In the more preferred embodiment, the total concentration of HCFC22, HCFC31 and HFC41 in the refrigerant is not higher than 0.5 mol %. preferably net higher than 0.1 mol % (typically not higher than 0.01 mol %, particularly not higher than 0.05 mol %). In the particularly preferred embodiment, the total concentration of HCC30, HCC40, HCFC22, HCFC31 and HFC41 in the refrigerant is not higher than 0.5 mol %, preferably net higher than 0.1 mol % (typically not higher than 0.01 mol %, particularly not higher than 0.05 mol %).

Among the C₁ halogenated hydrocarbons other than HFC32, HFC23 is relatively hard to be adsorbed and decomposed by the synthetic zeolite. Therefore, the refrigerant may contain 1 mol % or more of HFC23.

### Refrigerator oil

As a refrigerator oil is used an ether-based refrigerator oil (ether compound having at least one ether bonding group) or an ester-based refrigerator oil (ester compound having at least one ester bonding group), preferably a refrigerator oil based on the ester having 9 or more carbon atoms or a refrigerator oil based on the ether having 10 or more carbon atoms.

An example of the ether-based refrigerator oil is alkyl ether of polyglycol having an oxyethylene unit and/or oxypropylene unit. Specifically, the example is the compound represented by the below formula (1) or (2):

R¹-O-X-R² (1)

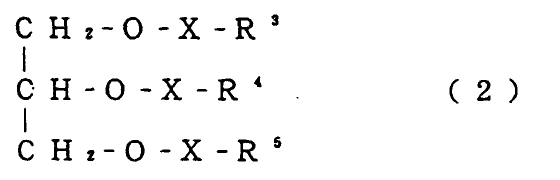

In the formulas (1) and (2), X represents a (co)polymer unit of ethylene oxide and/or propylene oxide. In the formula (1), R¹ and R² are the same or different and each represent a C₁-C₄ alkyl group (methyl, ethyl, n-propyl, isopropyl, n-butyl, isobutyl, sec-butyl, t-butyl).

In the formula (2), R³, R⁴ and R⁵ are the same or different and each represent a hydrogen atom or an alkyl group having 1 to 4 carbon atoms (methyl, ethyl, n-propyl, isopropyl, n-butyl, isobutyl, sec-butyl, t-butyl).

An example of the ester-based refrigerator oil is a polyol ester synthesized by intermolecular dehydration of a C₂-C₉ straight- or branched-chain fatty acid and a C₂-C₆ aliphatic polyhydric alcohol. Examples of the fatty acid include methylhexanoic acid, n-heptanoic acid and trimethylhexanoic acid. Examples of the polyhydric alcohol include pentaerythritol, trimethylolpropane and neopentylglycol.

The amount of the refrigerator oil to be added to the refrigerant is about 0.5-3 wt. parts based on one wt. part of the refrigerant.

### Drying agent

Generally, zeolite is a crystalline aluminosilicate represented by the formula (3)

M_{2/n}O·Al₂O₃·aSiO₂·bH₂O (3)

In the formula (3), M represents a metal cation, n is a valence of the metal cation, a is a number of 2 to 10 and b is a number of 2 to 7. Examples of the metal cation include monovalent cations such as Li, Na, K and Cs, and divalent cations such as Mg, Ca, Ba, etc. An example of the zeolite is that containing one or more metal cations.

By using the synthetic zeolite whose average microporous diameter is smaller than the molecular diameter of HFC32 as the drying agent for the working medium, specifically, by using the synthetic zeolite whose average microporous diameter is not larger 3.0 Å, the C₁ halogenated hydrocarbons such as HFC32 in the refrigerant are prevented from being adsorbed and decomposed, and the coexisting refrigerator oil for lubrication are prevented from destabilization.

By using the synthetic zeolite whose average microporous diameter is larger than the diameter of a water molecule as a drying agent for the working medium, specifically, by using the synthetic zeolite whose average microporous diameter is larger than 2.6 Å, preferably larger than 2.7 Å, more preferably larger than 2.8 Å, particularly preferably larger than 2.9 Å, dehydration (drying) from the working medium can be efficiently carried out.

The average microporous diameter of the synthetic zeolite can be determined by nitrogen adsorption, observation by an electron microscope (TEM, SEM), etc.

In the preferred embodiment, used is an A-type zeolite wherein the metal cation is Na and/or K, specifically a synthetic zeolite represented by the formula (4).

(Na₁₋ₓ·Kₓ)·(Al₂O₃)·(2SiO₂)·yH₂O (4)

In the formula (4), x is a number of 0 to 1, y is a number of about 0 to 6.

The amount of the synthetic zeolite to be used is not lower than about 0.2 wt. part, preferably not lower than about 0.5 wt. part, but not higher than about 3 wt. parts, preferably not higher than about 2 wt. parts, based on 1 wt. part of the working medium circulating inside the refrigerator.

The configurations of the drying agent are not particularly limited. The synthetic zeolite may be used in a powdery, granular or molded form. The shape of the molded zeolite is not particularly limited, and may be, for example, cylindrical, prism or globular. Binders may be used for molding the synthetic zeolite. Usable binders are clay binders or silica binders. Examples of clay binders are kaolin clays.

The kaolin clays include kaolin minerals, serpentine minerals, chamosite, amesite, greenalite, cronstedtite, hydrated halloysite, halloysite, kaolinite, dickite, nacrite, chrysotile, antigorite, Zettlitz kaolin, Cornish china clay, Georgia kaolin, Hong Kong kaolin, Korean kaolin, Fuzhou clay, *Gaerome* clay, Seta kaolin, Iwate kaolin, Hijiori kaolin, Ibusuki kaolin, Kanpaku kaolin, etc. These clays may be used singly or in combination of two or more types.

The proportion of the synthetic zeolite and the binder for kneading is not particularly limited. Generally, the proportion of the binder to the synthetic zeolite is not lower than 1 wt.%, preferably not lower than 10 wt.%, more preferably not lower than 20 wt.%, but not higher than 50 wt.%, preferably not higher than 40 wt.%, more preferably not higher than 30 wt.%.

### Effect of the Invention

According to the present invention, by using a synthetic zeolite whose average microporous diameter is smaller than the diameter of an HFC32 molecule (not larger than 3.0 Å) but larger than the diameter of a water molecule (larger than 2.6 Å) as a drying agent for a working medium comprising a refrigerant containing HFC32 as an essential component and an ether-based refrigerator oil or an ester-based refrigerator oil, or in the preferred embodiment, by setting the upper limit of the concentration of C₁ halogenated hydrocarbons other than HFC32 in the refrigerant, C₁ halogenated hydrocarbons in the refrigerant are prevented from being adsorbed and decomposed by the synthetic zeolite and the synthetic zeolite is prevented from being increased in activity to the refrigerator oil.

As a result, the present invention can provide a refrigerator employing a vapor compression type refrigeration cycle system wherein the working medium can be dried for a long time without impairing the stability and performance of the working medium, and the system can be operated smoothly for a long time. Specifically, the refrigerator of the present invention is free from decomposition of refrigerator oil, and therefore does not have the problem of the plugged capillary.

### Examples

The following examples are provided to illustrate the present invention. The present invention is not limited to below Examples.

### Example 1 and Comparative Example 1

### [Reactivity of synthetic zeolite and refrigerant]

In an approx. 10 cc-volume sealed tube made of pressure-resistant glass, about 0.25 g of synthetic zeolite and about 0.78 g of HFC32 were heated together at specific a temperature (50°C, 100°C or 150°C) for 30 days. Then the concentration of halogen (fluorine) remaining within the zeolite was determined.

In Comparative Example 1 was used synthetic zeolite with the average microporous diameter (about 3.5 Å) similar to that of conventional zeolite. In Example 1 was used synthetic zeolite whose average microporous diameter was controlled to be 3.0 Å. The results are shown in Table 1. When synthetic zeolite has a low fluorine concentration, it is considered to have low potential to decompose HFC32 (refrigerant).

**Table 1**

| | Average microporous diameter of zeolite | Fluorine concentration (wt. ppm) | | |
|---|---|---|---|---|
| | | 50°C | 70°C | 90°C |
| Comparative Example 1 | 3.5 Å | 100 | 450 | 1700 |
| Example 1 | 3.0 Å | 20 | 60 | 400 |

### [Reactivity of zeolite and refrigerator oil]

In a sealed tube were placed 0.25 g of the synthetic zeolite used in the above tests together with about 2.0 g of an ester oil ("RB68P" manufactured by Nippon Oil Co.). The tube was heated at a specific temperature (50°C, 100°C or 150°C) for 30 days, and the total acid value (mg·KOH/g) of the ester oil were determined. The result of each sample is shown in Table 2 as Example 1A and Comparative Example 1A. The lower the total acid value of the ester oil, the lower the reactivity of the synthetic zeolite with the refrigerator oil.

The reactivity of the synthetic zeolite with the refrigerator oil was determined following the procedure of the above test using the synthetic zeolite with fluorine remaining therein obtained in the above test after the reactivity with the refrigerant was determined. Namely, the synthetic zeolite was placed together with HFC32 at 50°C (Example 1B and Comparative Example 1B), 70°C (Example 1C and Comparative Example 1C) and 90°C (Example 1D and Comparative Example 1D). The results are shown in Table 2.

**Table 2**

| | Zeolite | | Total acid value of ester oil (mg·KOH/g) | | |
|---|---|---|---|---|---|
| | Average microporous diameter | Fluorine concentration (wt. ppm) | 50°C | 100°C | 150°C |
| Comparative Example 1A | 3.5 Å | 0 | 0.03 | 0.04 | 0.06 |
| Comparative Example 1B | 3.5 Å | 100 | 0.04 | 0.06 | 0.07 |
| Comparative Example 1C | 3.5 Å | 450 | 0.06 | 0.08 | 0.11 |
| Comparative Example 1D | 3.5 Å | 1700 | 0.09 | 0.15 | 0.55 |
| Example 1A | 3.0 Å | 0 | 0.03 | 0.05 | 0.06 |
| Example 1B | 3.0 A | 20 | 0.04 | 0.05 | 0.06 |
| Example 1C | 3.0 Å | 60 | 0.04 | 0.06 | 0.07 |
| Example 1D | 3.0 Å | 400 | 0.04 | 0.07 | 0.09 |

The results in Table 1 and Table 2 show that the synthetic zeolite with the average microporous diameter of 3.0 Å or smaller has low reactivity with the refrigerator oil even in the presence of HFC32. On the contrary, the synthetic zeolite with the average microporous diameter larger than 3.0 Å has higher reactivity with the refrigerator oil in the presence of HFC32. In particular, when used under the condition of 100°C or higher, the synthetic zeolite has high ability to decompose HFC32 and high reactivity with the refrigerator oil.

### Example 2

In a sealed tube was sealed a working medium comprising 0.015 mol of a refrigerant R410A (Sample A) containing HFC32 as an only C₁ halogenated hydrocarbon and 2 g of an ester-based refrigerator oil ("RB68P", ester oil manufactured by Kyodo Oil Co., Ltd.) and 0.25 g of a synthetic zeolite ("XH-10C" manufactured by Union Showa K.K.) with the average microporous diameter of 3.0 Å at 25°C. The tube was heated at a specific temperature (50°C, 100°C or 150°C) for 3 months, and the total acid value of the ester oil was determined. The result is shown in Table 4.

### Example 3

A test was carried out following the procedure of Example 2 with the exception that a refrigerant R407C (Sample B) containing HFC32 as an only C₁ halogenated hydrocarbon was used in place of Sample A. The result is shown in Table 4.

### Examples 4-9

To R410A was added C₁ halogenated hydrocarbons other than HFC32 (impurities) in the concentration of 1.0, 0.5, 0.1 and 0.05 mol % to prepare a refrigerant (Samples C-Z). Tests were carried out following the procedure of Example 2 with the exception that the above refrigerants were used in place of Sample A. The types and concentrations of the impurities in Samples C-Z are shown in Table 3. The results are shown in Table 4.

The results in Table 4 show that in Examples 4-8, particularly in the ranges of HCC30 (0.1 mol % or lower), HCC40 (0.1 mol % or lower), HCFC22 (0.5 mol % or lower), HCFC31 (0.1 mol % or lower) and HFC41 (0.5 mol % or lower), the total acid value of the ester-based refrigerator oil is merely 105% at the highest of that of Example 2 (R401A). With analysis accuracy taken into consideration, the values are not significantly different. In addition, in Example 9, the total acid value of HFC23 (1 mol %) is not significantly different from that of Example 2.

**Table 3**

| Example | Sample | Impurity | Concentration (mol %) |
|---|---|---|---|
| 4 | C | HCC30 | 1.0 |
| | D | HCC30 | 0.5 |
| | E | HCC30 | 0.1 |
| | F | HCC30 | 0.05 |
| 5 | G | HCC40 | 1.0 |
| | H | HCC40 | 0.5 |
| | I | HCC40 | 0.1 |
| | J | HCC40 | 0.05 |
| 6 | K | HCFC22 | 1.0 |
| | L | HCFC22 | 0.5 |
| | M | HCFC22 | 0.1 |
| | N | HCFC22 | 0.05 |
| 7 | O | HCFC31 | 1.0 |
| | P | HCFC31 | 0.5 |
| | Q | HCFC31 | 0.1 |
| | R | HCFC31 | 0.05 |
| 8 | S | HFC41 | 1.0 |
| | T | HFC41 | 0.5 |
| | U | HFC41 | 0.1 |
| | V | HFC41 | 0.05 |
| 9 | W | HFC23 | 1.0 |
| | X | HFC23 | 0.5 |
| | Y | HFC23 | 0.1 |
| | Z | HFC23 | 0.05 |

**Table 4**

| | Sample | Total acid value of ester oil (mg·KOH/g) | | |
|---|---|---|---|---|
| | | 50°C | 100°C | 150°C |
| Example 2 | A | 0.020 | 0.025 | 0.079 |
| Example 3 | B | 0.018 | 0.024 | 0.075 |
| Example 4 | C | 0.030 | 0.042 | 0.138 |
| | D | 0.027 | 0.028 | 0.107 |
| | E | 0.020 | 0.025 | 0.082 |
| | F | 0.020 | 0.025 | 0.078 |
| Example 5 | G | 0.027 | 0.039 | 0.128 |
| | H | 0.023 | 0.026 | 0.098 |
| | I | 0.020 | 0.023 | 0.080 |
| | J | 0.020 | 0.023 | 0.078 |
| Example 6 | K | 0.026 | 0.031 | 0.099 |
| | L | 0.023 | 0.023 | 0.080 |
| | M | 0.021 | 0.023 | 0.078 |
| | N | 0.020 | 0.023 | 0.078 |
| Example 7 | O | 0.028 | 0.035 | 0.103 |
| | P | 0.025 | 0.028 | 0.089 |
| | Q | 0.021 | 0.023 | 0.078 |
| | R | 0.020 | 0.023 | 0.077 |
| Example 8 | S | 0.028 | 0.032 | 0.102 |
| | T | 0.021 | 0.025 | 0.082 |
| | U | 0.020 | 0.025 | 0.080 |
| | V | 0.019 | 0.025 | 0.079 |
| Example 9 | W | 0.021 | 0.027 | 0.080 |
| | X | 0.020 | 0.026 | 0.079 |
| | Y | 0.020 | 0.026 | 0.078 |
| | Z | 0.020 | 0.026 | 0.078 |

## Claims

1. A vapor compression type refrigerator having a working medium comprising a refrigerant containing HFC32 as an essential component and at least one refrigerator oil selected from the group consisting of an ether-based refrigerator oil and an ester-based refrigerator oil, wherein a synthetic zeolite having an average microporous diameter larger than 2.6 Å but not larger than 3.0 Å at 25°C is used as a drying agent for the working medium.

2. The refrigerator according to claim 1, wherein the average microporous diameter of the synthetic zeolite is 2.7-3.0 Å at 25°C.

3. The refrigerator according to claim 1, wherein the average microporous diameter of the synthetic zeolite is 2.8-3.0 Å at 25°C.

4. The refrigerator according to claim 1, wherein the refrigerator oil is a refrigerator oil based on an ester having 9 or more carbon atoms and/or a refrigerator oil based on an ether having 10 or more carbon atoms.

5. The refrigerator according to any of claims 1 to 4, which is provided with a capillary as pressure reducer.

6. The refrigerator according to claim 1, wherein the refrigerant contains at least one member selected from the group consisting of FC116, HFC125, HFC134a, HFC143a and HFC152a.

7. The refrigerator according to any of claims 1 to 6, wherein the refrigerant contains a C₁ halogenated hydrocarbon other than HFC32.

8. The refrigerator according to claim 7, wherein the C₁ halogenated hydrocarbon other than HFC32 is at least one member selected from the group consisting of HCC30, HCC40, HCFC22, HCFC31, HFC41, CFC12 and HFC23.

9. The refrigerator according to claim 8, wherein the refrigerant contains HCC30 in a concentration of 0.1 mol % or less, HCC40 in a concentration of 0.1 mol % or less, HCFC22 in a concentration of 0.5 mol % or less, HCFC31 in a concentration of 0.1 mol % or less and HFC41 in a concentration of 0.5 mol % or less.

10. The refrigerator according to claim 7, wherein the amount of the refrigerant adsorbed and decomposed by the synthetic zeolite used as a drying agent, within the range of conditions for use, is equal to or less than the amount of HFC32 adsorbed and decomposed when HFC32 is used singly as a refrigerant.

11. The refrigerator according to claim 10, wherein the upper limit of the temperature range of use conditions is not lower than 90°C.

12. The refrigerator according to claim 10, wherein the temperature range of use conditions is -40°C to 120°C.

13. A working medium for a refrigerator which uses a synthetic zeolite having an average microporous diameter larger than 2.6 Å but not larger than 3.0 Å at 25°C as a drying agent for the working medium, wherein the working medium comprises a refrigerant containing HFC32 as an essential component and at least one refrigerator oil selected from the group consisting of an ether-based refrigerator oil and an ester-based refrigerator oil, the refrigerant containing a C₁ halogenated hydrocarbon other than HFC32, and within the range of conditions for use, the amount of the refrigerant adsorbed and decomposed by the synthetic zeolite used as a drying agent is equal to or less than that of HFC32 adsorbed and decomposed when HFC32 is used singly as a refrigerant.

14. The working medium according to claim 13, wherein the upper limit of the temperature range of use conditions is not lower than 90°C.

15. The working medium according to claim 13, wherein the temperature range of use conditions is -40°C to 120°C.

16. The working medium according to claim 13, wherein the refrigerant contains at least one member selected from the group consisting of FC116, HFC125, HFC134a, HFC143a and HFC152a.

17. The working medium according to any of claims 13 to 16, wherein the C₁ halogenated hydrocarbon other than HFC32 is at least one member selected from the group consisting of HCC30, HCC40, HCFC22, HCFC31, HFC41, CFC12 and HFC23.

18. The working medium according to claim 17, wherein the refrigerant contains HCC30 in a concentration of 0.1 mol % or less, HCC40 in a concentration of 0.1 mol % or less, HCFC22 in a concentration of 0.5 mol % or less, HCFC31 in a concentration of 0.1 mol % or less and HFC41 in a concentration of 0.5 mol % or less.
